(19) Europäisches Patentamt
European Patent Office
Office européen des brevets

(11) EP 4 730 423 A1
## (12) EUROPEAN PATENT APPLICATION

(43) Date of publication:
22.04.2026 Bulletin 2026/17

(21) Application number: 25203329.5

(22) Date of filing: 19.09.2025

(51) International Patent Classification (IPC):
$H01M\ 4/136^{(2010.01)}$  $H01M\ 4/02^{(2006.01)}$

(52) Cooperative Patent Classification (CPC):
H01M 4/136; H01M 2004/021

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: 17.10.2024 JP 2024181996

(71) Applicant: TOYOTA JIDOSHA KABUSHIKI KAISHA
Toyota-shi, Aichi-ken 471-8571 (JP)

(72) Inventors:
• OHSAWA, Ryosuke
Aichi-ken, 471-8571 (JP)
• ISHIGAKI, Yuki
Aichi-ken, 471-8571 (JP)

• KOSAKA, Daichi
Aichi-ken, 471-8571 (JP)
• MAHARA, Takanori
Aichi-ken, 471-8571 (JP)
• EGUCHI, Tatsuya
Kariya-shi, Aichi-ken, 448-8671 (JP)
• KIMIJIMA, Takeshi
Kariya-shi, Aichi-ken, 448-8671 (JP)

(74) Representative: Kuhnen & Wacker
Patent- und Rechtsanwaltsbüro PartG mbB
Prinz-Ludwig-Straße 40A
85354 Freising (DE)

### (54) POSITIVE ELECTRODE ACTIVE MATERIAL, ELECTRODE, AND BATTERY

(57) A positive electrode active material includes secondary particles (2). Each of the secondary particles (2) includes primary particles (1). Each of the primary particles (1) includes an olivine-type phosphate compound. An open pore (3) is formed in the secondary particle (2). The open pore (3) is a non-through hole. A cross section of the secondary particle (2) satisfies relationships of "0.9≤d/D≤10.1" and "1.9≤Sd/d≤33.4". "d" represents a maximum depth of the open pore (3). "D" represents an opening diameter of the open pore (3). "Sd" represents a diameter of a smallest circumcircle of the cross section of the secondary particle (2).

FIG.2

EP 4 730 423 A1

**Description**

CROSS REFERENCE TO RELATED APPLICATIONS

This nonprovisional application is based on Japanese Patent Application No. 2024-181996 filed on October 17, 2024, with the Japan Patent Office, the entire contents of which are hereby incorporated by reference.

BACKGROUND

Field

The present disclosure relates to a positive electrode active material, an electrode, and a battery.

Description of the Background Art

International Patent Laying-Open No. WO 2020/065833 discloses primary particles that include a lithium manganese phosphate compound and that have an average particle size of 60 nm or less.

SUMMARY

As a positive electrode active material, olivine-type phosphate compounds have been researched. Olivine-type phosphate compounds tend to have insufficient rate properties. Conventionally, suggestions have been made for improving rate properties by, for example, reducing the size of the primary particles. However, there is still room for improvement in rate properties.

An object of the present disclosure is to improve rate properties.

Hereinafter, the technical configuration and effects of the present disclosure will be described. It should be noted that the action mechanism includes presumption. The action mechanism does not limit the technical scope of the present disclosure.

1. An aspect of the present disclosure is a positive electrode active material. The positive electrode active material includes secondary particles. Each of the secondary particles includes primary particles. Each of the primary particles includes an olivine-type phosphate compound. An open pore is formed in the secondary particle. The open pore is a non-through hole. A cross section of the secondary particle satisfies relationships of "$0.9 \leq d/D \leq 10.1$" and "$1.9 \leq Sd/d \leq 33.4$". "$d$" represents a maximum depth of the open pore. "$D$" represents an opening diameter of the open pore. "$Sd$" represents a diameter of a smallest circumcircle of the cross section of the secondary particle.

The secondary particle is a group of a plurality of primary particles. When the size of the primary particle is reduced, an ion diffusion pathway inside the primary particle becomes shorter, and thereby rate properties are expected to be improved. On the other hand, packing of the primary particles becomes denser, and thereby the electrolyte solution tends not to permeate into the secondary particle. As a result, there is a chance that desired rate properties may not be obtained. In the present disclosure, the secondary particle has a particular shape. More specifically, the secondary particle has an open pore that is a non-through hole. The open pore is expected to function as a pathway for diffusion of electrolyte solution into the secondary particle. Furthermore, when the depth "$d$" of the open pore, the opening diameter "$D$" of the open pore, and the size "$Sd$" of the secondary particle satisfy a particular relationship, electrolyte solution can diffuse efficiently and thereby rate properties are expected to be improved.

2. The positive electrode active material according to "1" above may include the following configuration, for example. The open pore has a bottom portion inside the secondary particle, and the bottom portion has a shape of a concave surface.

3. The positive electrode active material according to "1" or "2" above may include the following configuration, for example. The cross section of the secondary particle satisfies a relationship of "$1 < d/R$". "$d$" represents the maximum depth of the open pore. "$R$" represents a radius of curvature of the bottom portion of the open pore.

4. The positive electrode active material according to any one of "1" to "3" above may include the following configuration, for example. The olivine-type phosphate compound includes at least one selected from the group consisting of lithium manganese phosphate and lithium manganese iron phosphate.

Conventionally, as an olivine-type phosphate compound, lithium iron phosphate (LFP) has been in practical use. Both lithium manganese phosphate (LMP) and lithium manganese iron phosphate (LMFP) tend to have higher resistance than LFP. When using LMP and LMFP, in order to achieve a practical level of resistance, it can be necessary to further reduce the size of the primary particles. It is conceivable that the secondary particle structure according to the present disclosure is suitable for LMP and LMFP.

5. An aspect of the present disclosure is an electrode. The electrode includes a positive electrode layer. The positive electrode layer includes the positive electrode active material according to any one of "1 " to "4" above.

The positive electrode layer may also be called "a positive electrode active material layer", "a positive electrode composite material layer", and the like. "Electrode" may be either "a monopolar electrode (a positive electrode)" or "a bipolar electrode" as long as it includes a positive electrode layer.

6. An aspect of the present disclosure is a battery. The battery includes the electrode according to "5" above.

7. The battery according to "6" above may include the following configuration, for example. The battery has a bipolar structure.

The bipolar structure may be formed by stacking bipolar electrodes together. With the bipolar structure, output properties are expected to be enhanced, for example.

In the following, an embodiment of the present disclosure (which may be simply called "the present embodiment" hereinafter) and an example of the present disclosure (which may be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a first conceptual view illustrating a secondary particle according to the present embodiment.
Fig. 2 is a second conceptual view illustrating a secondary particle according to the present embodiment.
Fig. 3 is a third conceptual view illustrating a secondary particle according to the present embodiment.
Fig. 4 is a schematic flowchart illustrating a method of producing a positive electrode active material according to the present embodiment.
Fig. 5 is a schematic perspective view illustrating a battery according to the present embodiment.
Fig. 6 is a schematic view of a cross section cut along the line VI-VI in Fig. 5.
Fig. 7 is a table showing experiment results.
Fig. 8 is a temperature profile during calcination.

DESCRIPTION OF THE PREFERRED EMBODIMENTS

- Terms and Phrases -

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are independent of the order and the significance of these elements.

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

A singular form may also include its plural meaning, unless otherwise specified. For example, a particle may mean a plurality of particles, a group of particles, and a powdery and granular material. "A plurality of particles" may also be called "a particle group ".

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Each of "not less than" and "not more than" is represented by an inequality symbol with an equality symbol, e.g., "$\leq$, $\geq$". Each of "more than" and "less than" is represented by an inequality symbol without an equality symbol, e.g., "<, >". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values and the like is merely an example. It is possible to use a product similar to the apparatus and/or the like presented as an example. When a similar product is used, the measurement conditions may be adjusted to be suitable for the apparatus.

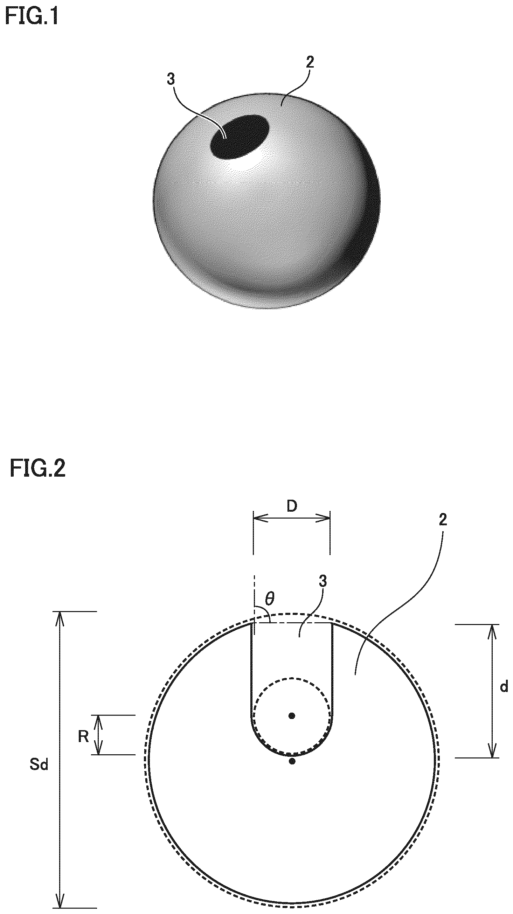

Fig. 1 is a first conceptual view illustrating a secondary particle according to the present embodiment. Fig. 2 is a second conceptual view illustrating a secondary particle according to the present embodiment. In Fig. 2, a concept of a cross section of a secondary particle 2 illustrated in Fig. 1 is shown. The shape of the secondary particle is evaluated in a cross-sectional scanning electron microscope (SEM) image. For example, the cross-sectional SEM image may be obtained by the procedure described below. For example, in a mixture (10 g) of an epoxy resin (under the trade name of "EPOTEX JP", manufactured by Nisshin-EM) as a main agent and a curing agent, 1 g of positive electrode active material (powder) is dispersed to form a dispersion. The resulting dispersion is stirred and mixed for 1 minute with a mixer (under the trade name of "Awatori-Rentaro" (THINKY MIXER), manufactured by Thinky). The stirring rate may be about 2000 rpm, for example. The dispersion is subjected to vacuum defoaming. After vacuum defoaming, the dispersion is filled into a round tubular vessel made of resin. The dispersion is left for 1 day for curing of the epoxy resin. After curing, the cured product is subjected to wet polishing, and thereby a cross-sectional sample having an even and smooth cross section is prepared. The even and smooth cross section is examined with an SEM to obtain a cross-sectional SEM image of the positive electrode active material. Measurement of dimensions and areas in the cross-sectional SEM image, curve fitting, and the like may be carried out with the use of image analysis software. For example, "ImageJ" and/or the like may be used.

Within the cross-sectional SEM image, 10 secondary particles 2 each having an open pore 3 are randomly selected. Each of the values described below ("d", "D", "Sd", "R") is measured for 10 secondary particles. The arithmetic mean of these 10 measurements is adopted. When one secondary particle 2 has a plurality of open pores 3, each of "d", "D", and "R" is the value of the deepest open pore 3.

The diameter "Sd" is the diameter of the smallest circumcircle. "Smallest circumcircle" refers to the smallest circle among the circles circumscribing secondary particle 2. In Fig. 2, for the sake of convenience of explanation, the smallest circumcircle (the dotted line) is slightly displaced from the contour (the solid line) of secondary particle 2.

"Open pore" refers to a pore that communicates with the outside air. The maximum depth "d" is the shortest distance between a point on the contour of open pore 3 at which the contour is farthest away from a line connecting both ends of the opening of open pore 3, and the line. The length of the line connecting both ends of the opening is the opening diameter "D".

The contour of open pore 3 may be U-shaped. More specifically, open pore 3 may have a bottom portion that is in the shape of a concave surface. The radius of curvature "R" is the radius of curvature of the bottom portion. A circle is fitted to the contour of the bottom portion. Fitting of the circle is carried out so as to maximize the part of the circle in contact with the contour of the bottom portion. The radius of the circle is regarded as the radius of curvature "R". The contour of open pore 3 may be rectangular, V-shaped, and/or the like, for example.

"Maximum Feret diameter" refers to the length of the long side of the smallest circumscribing rectangular (an oblong or a square) that circumscribes the particle. When the smallest circumscribing rectangular is square, the length of the long side refers to the length of a side. The maximum Feret diameter of a primary particle may be measured in a transmission electron microscopy (TEM) image, for example.

"D50" refers to a particle size in volume-based particle size distribution of powder measured by laser diffraction, at which cumulative frequency reaches 50%.

A stoichiometric composition formula represents a typical example of a compound. A compound may have a non-stoichiometric composition. For example, "$Al_2O_3$" is not limited to a compound where the ratio in amount of substance (the molar ratio) is "Al/O=2/3". "$Al_2O_3$" represents a compound that includes Al and O in any ratio in amount of substance, unless otherwise specified. For example, the compound may be doped with a trace element. Some of Al and/or O may be replaced by another element.

The chemical composition of a compound may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

- Positive Electrode Active Material -

The positive electrode active material includes secondary particles 2. The positive electrode active material may be powder that includes a plurality of secondary particles 2. The D50 of the positive electrode active material may be 5 $\mu$m or more, or 10 $\mu$m or more, or 15 $\mu$m or more, or 20 $\mu$m or more, for example. The D50 of the positive electrode active material may be 30 $\mu$m or less, or 25 $\mu$m or less, or 20 $\mu$m or less, or 15 $\mu$m or less, or 10 $\mu$m or less, for example.

Secondary particle 2 has open pore 3. As long as it includes secondary particle 2 having open pore 3, the positive electrode active material may also include a secondary particle that does not have open pore 3. The number proportion of secondary particles 2 each having open pore 3 to all the secondary particles included in the positive electrode active material may be 5% or more, or 10% or more, or 20% or more, or 30% or more, or 40% or more, or 50% or more, or 60% or more, or 70% or more, or 80% or more, or 90% or more, for example. The number proportion of secondary particles 2 each having open pore 3 to all the secondary particles included in the positive electrode active material may be 100% or less, or 90% or less, or 80% or less, or 70% or less, or 60% or less, or 50% or less, or 40% or less, or 30% or less, or 20% or less, or 10% or less, for example.

Secondary particle 2 may have only one open pore 3. Secondary particle 2 may have a plurality of open pores 3. The number of open pores 3 of one secondary particle 2 may be 2 or more, or 4 or more, or 6 or more, or 8 or more, for example. The number of open pores 3 of one secondary particle 2 may be 10 or less, or 8 or less, or 6 or less, or 4 or less, or 2 or less, for example.

The planar shape of the opening of open pore 3 may be circular. The circularity of the opening may be 0.85 or more, or 0.90 or more, or 0.95 or more, for example. The circularity of the opening may be 1 or less, or 0.95 or less, or 0.90 or less, for example. The circularity of the opening is determined by the following equation.

$$\psi = 4\pi S/L^2$$

$\psi$: Circularity
$\pi$: Circular constant
S: Area of opening
L: Perimeter of opening (the length of the contour of the opening)

The circularity refers to the arithmetic mean of 10 or more openings.

Open pore 3 has the maximum depth "d" and the opening diameter "D". The maximum depth "d" is divided by the opening diameter "D", and thereby the ratio "d/D" is calculated. In the present embodiment, the relationship of "0.9≤d/D≤10.1" is satisfied. The ratio "d/D" may be 1 or more, or 2 or more, or 3 or more, or 4 or more, or 5 or more, or 6 or more, or 7 or more, or 8 or more, or 9 or more, for example. The ratio "d/D" may be 9 or less, or 8 or less, or 7 or less, or 6 or less, or 5 or less, or 4 or less, or 3 or less, or 2 or less, for example.

The diameter "Sd" of the smallest circumcircle is divided by the maximum depth "d", and thereby the ratio "Sd/d" is calculated. In the present embodiment, the relationship of " 1.9≤Sd/d≤33.4" is satisfied. The ratio "Sd/d" may be 2 or more, or 4 or more, or 6 or more, or 8 or more, or 10 or more, or 12 or more, or 14 or more, or 16 or more, or 18 or more, or 20 or more, or 22 or more, or 24 or more, or 26 or more, or 28 or more, or 30 or more, or 32 or more, for example. The ratio "Sd/d" may be 32 or less, or 30 or less, or 28 or less, or 26 or less, or 24 or less, or 22 or less, or 20 or less, or 18 or less, or 16 or less, or 14 or less, or 12 or less, or 10 or less, or 8 or less, or 6 or less, or 4 or less, for example.

The maximum depth "d" is divided by the radius of curvature "R", and thereby the ratio "d/R" is calculated. For example, the relationship of "1<d/R" may be satisfied. The ratio "d/R" may be 1.2 or more, or 1.4 or more, or 1.6 or more, or 1.8 or more, or 2 or more, for example. The ratio "d/R" may be 4 or less, or 3 or less, or 2 or less, or 1.8 or less, or 1.6 or less, or 1.4 or less, or 1.2 or less, for example.

The diameter "Sd" may be 5 μm or more, or 10 μm or more, or 15 μm or more, or 20 μm or more, for example. The diameter "Sd" may be 30 μm or less, or 25 μm or less, or 20 μm or less, or 15 μm or less, or 10 μm or less, for example.

In some present embodiments, the angle "θ" formed by the tangent to open pore 3 at the opening (the side wall) and the line connecting both ends of the opening may be from 60° to 150°, for example. The angle "θ" may be 75° or more, or 90° or more, or 105° or more, or 120° or more, or 135° or more, for example. The angle "θ" may be 135° or less, or 120° or less, or 105° or less, or 90° or less, or 75° or less, for example.

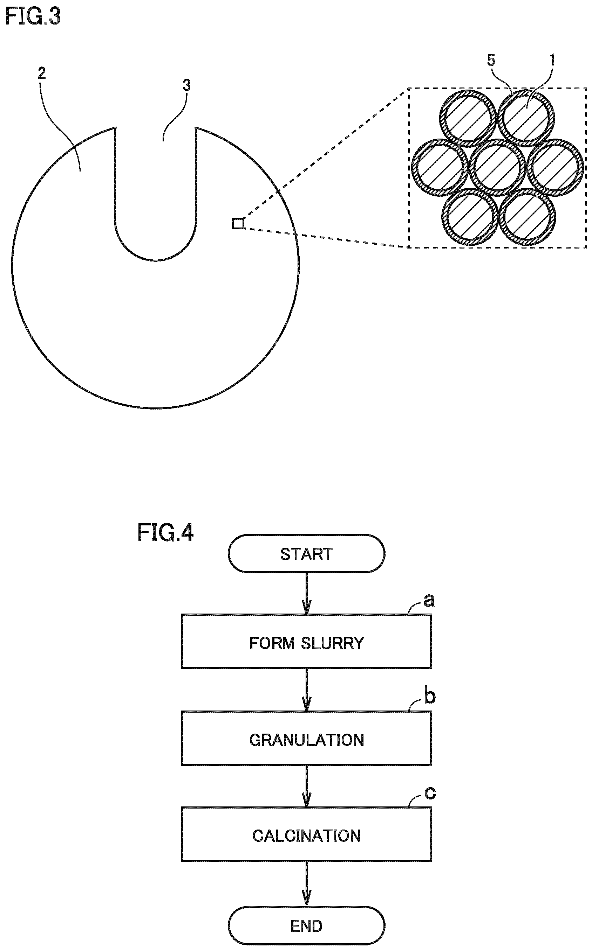

Fig. 3 is a third conceptual view illustrating a secondary particle according to the present embodiment. Secondary particle 2 is an aggregate of primary particles 1. Secondary particle 2 includes a plurality of primary particles 1. Primary particles 1 may be nanoparticles. The average maximum Feret diameter of primary particles 1 may be from 10 to 90 nm, for example. The average maximum Feret diameter of primary particles 1 may be 20 nm or more, or 30 nm or more, or 40 nm or more, or 50 nm or more, or 60 nm or more, or 70 nm or more, or 80 nm or more, for example. The average maximum Feret diameter of primary particles 1 may be 80 nm or less, or 60 nm or less, for example. The average value is calculated from results of measurement of 10 or more primary particles 1.

To at least part of the surface of primary particle 1, carbon may be adhered. The carbon may form a carbon layer 5. The amount of adhered carbon in mass fraction relative to secondary particle 2 may be 0.1% or more, or 0.5% or more, or 1% or more, or 2% or more, or 3% or more, or 4% or more, for example. The amount of adhered carbon in mass fraction relative to secondary particle 2 may be 5% or less, or 4% or less, or 3% or less, for example.

Each of primary particles 1 includes an olivine-type phosphate compound. The olivine-type phosphate compound includes an olivine-type crystalline phase. "Olivine-type" refers to a crystal structure belonging to the space group Pnma. The space group is identified by X-ray diffraction (XRD) measurement of the powder. As long as it includes an olivine-type crystalline phase, the olivine-type phosphate compound may further include any crystalline phase. The olivine-type phosphate compound may further include an amorphous phase and/or the like, for example.

The olivine-type phosphate compound may include at least one selected from the group consisting of LFP, LMP, and LMFP, for example. The olivine-type phosphate compound may include at least one selected from the group consisting of LMP and LMFP, for example. The LMFP may have a composition represented by the following general formula, for example.

$$Li_aMn_{1-x}Fe_xPO_4$$

The relationship of "0.5≤a≤1.5" may be satisfied, for example. x may be more than 0, or 0.05 or more, or 0.1 or more, or 0.2 or more, or 0.3 or more, or 0.4 or more, or 0.5 or more, or 0.6 or more, or 0.7 or more, or 0.8 or more, or 0.9 or more, for example. x may be less than 1, or 0.9 or less, or 0.8 or less, or 0.7 or less, or 0.6 or less, or 0.5 or less, or 0.4 or less, or 0.3 or less, or 0.2 or less, or 0.1 or less, for example.

The LMFP and/or the like may be doped with an element (a dopant) other than lithium (Li), manganese (Mn), iron (Fe), phosphorus (P), and oxygen (O). The doping amount (the fraction in amount of substance relative to the amount of substance of Li) may be from 0.01 to 0.1, for example. The dopant may include at least one selected from the group consisting of boron (B), nitrogen (N), a halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and an actinoid, for example.

The positive electrode active material may further include another component as long as it includes an olivine-type phosphate compound. This another component may include lithium-nickel composite oxide (LNO), lithium-cobalt composite oxide (LCO), lithium-manganese composite oxide (LMO), and/or the like, for example. The mixing ratio (in mass) between the olivine-type phosphate compound and the another component may be "(olivine-type phosphate compound)/(another component)=9/1 to 1/9", or "(olivine-type phosphate compound)/(another component)=8/2 to 2/8", or "(olivine-type phosphate compound)/(another component)=7/3 to 3/7", or "(olivine-type phosphate compound)/(another component)=6/4 to 4/6", for example. The positive electrode active material may be a mixture of powder of the olivine-type phosphate compound and powder of the another component, for example.

The LNO may have a crystal structure belonging to the space group R-3m, for example. The LNO may have a composition represented by the following general formula, for example.

$$Li_aNi_xM_{1-x}O_2$$

In the formula, the relationships of $0.5 \leq a \leq 1.5$, $0 \leq x \leq 1$ are satisfied. M may include, for example, at least one selected from the group consisting of Co, Mn, and Al. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, the relationship of $0.6 \leq a \leq 1.4$, $0.7 \leq a \leq 1.3$, $0.8 \leq a \leq 1.2$, or $0.9 \leq a \leq 1.1$ may be satisfied.

The LNO may include at least one selected from the group consisting of $LiNi_{0.9}Co_{0.1}O_2$, $LiNi_{0.9}Mn_{0.1}O_2$, and $LiNiO_2$, for example.

The LNO may be represented by the following general formula, for example. A compound represented by the following general formula may also be called "NCM".

$$Li_aNi_xCo_yMn_zO_2$$

In the formula, the relationships of $0.5 \leq a \leq 1.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$, for example.

The LNO may be represented by the following general formula, for example. A compound represented by the following general formula may also be called "NCA".

$$Li_aNi_xCo_yAl_zO_2$$

In the formula, the relationships of $0.5 \leq a \leq 1.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$, for example.

- Method of Producing Positive Electrode Active Material -

Fig. 4 is a schematic flowchart illustrating a method of producing a positive electrode active material according to the present embodiment. Hereinafter, "the method of producing a positive electrode active material according to the present embodiment" may be simply called "the present method". The present method includes "(a) forming a slurry", "(b) granulation", and "(c) calcination", for example.

(a) Forming Slurry

The present method may include, for example, forming a slurry that includes a lithium compound, a manganese compound, an iron compound, a phosphate compound, and a solvent. For example, the slurry may be formed by dispersing the materials in the solvent. For example, the lithium compound, the manganese compound, the iron compound, and the phosphate compound may be prepared in amounts that satisfy the composition ratio (in amount of substance) specified in the composition formula "$Li_aMn_{1-x}Fe_xPO_4$ (0.5≤a≤1.5, 0≤x≤1)". The lithium compound may include lithium hydroxide and/or the like, for example. The manganese compound may include manganese carbonate and/or the like, for example. The iron compound may include ferric phosphate and/or the like, for example. The phosphate compound may include lithium dihydrogen phosphate and/or the like, for example.

The slurry may be formed so as to further include a carbon material. The carbon material may form a carbon layer on the surface of each primary particle. The carbon material may include glucose, sucrose, fructose, citric acid, and/or the like, for example. The amount of the carbon material to be added in mass fraction relative to the raw material mixture (the sum of the lithium compound, the manganese compound, the phosphate compound, and the iron compound) may be from 1 to 20%, for example.

The solvent may include water and/or the like, for example. The solid concentration of the slurry in mass fraction may be from 20 to 40%, for example.


(b) Granulation

The present method may include, for example, forming secondary particles by spray drying the slurry. Each primary particle constituting the secondary particles includes a precursor of an olivine-type phosphate compound. The conditions may be adjusted so that, for example, the droplets (the slurry) shrink non-uniformly at the time of spray drying. As a result of the non-uniform shrinkage of the droplets, an open pore (a non-through hole) is expected to be formed in the secondary particle. For example, the temperature at the air outlet (the outlet temperature) of the spray dryer may be set high. The temperature at the air outlet may be from 160 to 170°C, for example. The temperature at the air inlet may be about 250°C, for example. The air intake pressure may be about 2.0 MPa, for example. The spray pressure (the nozzle pressure) may be about 0.2 MPa, for example.


(c) Calcination

The present method may include performing heat treatment of the secondary particles to produce a positive electrode active material. As a result of heating of the precursor, an olivine-type phosphate compound may be produced from the precursor.

In the present method, any heat treatment furnace (such as, for example, an electric furnace, a muffle furnace, and/or the like) may be used. The heat treatment atmosphere may be an inert atmosphere, for example. The inert atmosphere may be a nitrogen atmosphere and/or the like, for example. The heat treatment temperature may be from 400 to 700°C, for example. The heat treatment time may be from 4 to 6 hours, for example.


- Liquid-Type Battery -

In some present embodiments, the battery may be a liquid-type battery. "Liquid-type battery" refers to a battery that includes an electrolyte solution. For example, a polymer battery includes an electrolyte solution and is therefore a liquid-type battery. In some present embodiments, the battery has a monopolar structure. In some present embodiments, the battery has a bipolar structure. As an example, a battery having a bipolar structure (a bipolar battery) will be described.

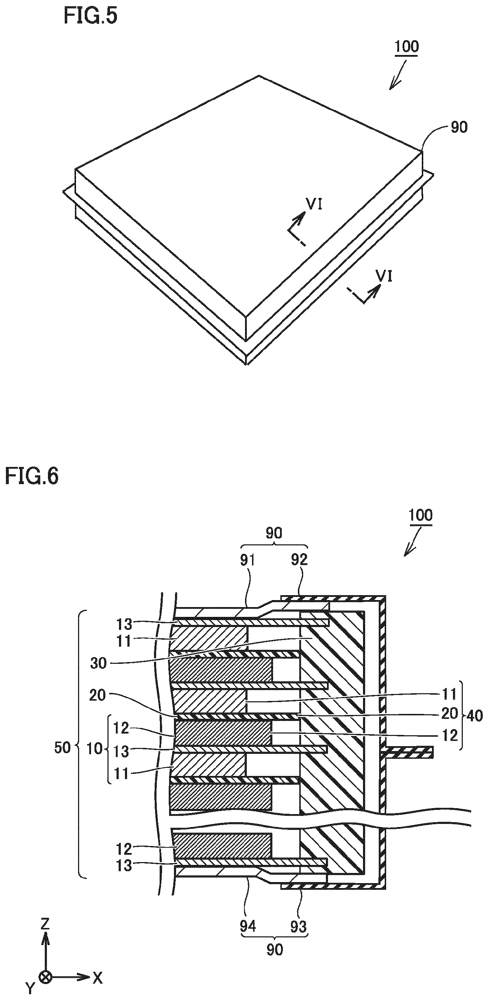

Fig. 5 is a schematic perspective view illustrating a battery according to the present embodiment. Fig. 6 is a schematic view of a cross section cut along the line VI-VI in Fig. 5. Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

A battery 100 includes an exterior package 90 and a power generation element 50. Exterior package 90 accommodates power generation element 50. Exterior package 90 may include a first current collector plate 91, a first laminated film 92, a second laminated film 93, and a second current collector plate 94, for example. First laminated film 92 and second laminated film 93 are joined to each other at an end in an in-plane direction. At the joint portion between first laminated film 92 and second laminated film 93, a sealing material (not illustrated) may be interposed between first laminated film 92 and second laminated film 93.

At the ends in the stacking direction (the Z-axis direction), first current collector plate 91 and second current collector plate 94 are joined to power generation element 50, respectively. First laminated film 92 is joined to first current collector plate 91. Second laminated film 93 is joined to second current collector plate 94. At the joint portion between the current collector plate and the laminated film, a sealing material (not illustrated) may be interposed between the current collector plate and the laminated film.

Power generation element 50 includes a plurality of bipolar electrodes 10. Bipolar electrodes 10 are stacked in the perpendicular-to-plane direction (the Z-axis direction). In the perpendicular-to-plane direction, each bipolar electrode 10 includes a positive electrode layer 11, a current-collecting foil sheet 13, and a negative electrode layer 12 in this order. In an in-plane direction (for example, the X-axis direction), current-collecting foil sheet 13 extends outwardly beyond positive electrode layer 11 and negative electrode layer 12. For example, current-collecting foil sheet 13 may extend outwardly beyond positive electrode layer 11 and negative electrode layer 12 for the entire periphery in an in-plane direction.

Current-collecting foil sheet 13 is a conductor. For example, current-collecting foil sheet 13 may include a metal foil sheet, an electrically-conductive resin layer, and/or the like. For example, current-collecting foil sheet 13 may be formed by bonding an Al foil sheet and a Cu foil sheet together. A surface of current-collecting foil sheet 13 may have a carbon material applied thereto. The carbon material may include carbon black and/or the like, for example.

Power generation element 50 includes a sealing material 30. At an end in an in-plane direction, sealing material 30 is attached to current-collecting foil sheet 13. For example, sealing material 30 may be heat-sealed to current-collecting foil sheet 13. For example, sealing material 30 may be provided along the entire periphery in an in-plane direction. The sealing material may include a resin material and/or the like, for example. Sealing material 30 seals interstices between current-collecting foil sheets 13 that are adjacent to each other in the perpendicular-to-plane direction. The interstices between current-collecting foil sheets 13 are thus sealed with sealing material 30, and thereby cells 40 are formed. A cell 40 is the smallest constituent unit of power generation element 50. Because it includes a plurality of cells 40, battery 100 may also be referred to as "a bipolar module". Each of cells 40 is hermetically sealed. Cells 40 are segregated from each other. Each of cells 40 includes positive electrode layer 11, a separator 20, negative electrode layer 12, and an electrolyte solution.

Positive Electrode Layer

Positive electrode layer 11 is adhered to one side of current-collecting foil sheet 13. For example, a groove may be formed in positive electrode layer 11. Positive electrode layer 11 may be formed in stripes, for example. Positive electrode layer 11 includes a positive electrode active material. That is, battery 100 includes a positive electrode active material. The details of the positive electrode active material are as described above.

In addition to the positive electrode active material, positive electrode layer 11 may further include a conductive material, a binder, and the like, for example. The amount of the conductive material to be used may be, for example, from 0.1 to 10 parts by mass relative to 100 parts by mass of the positive electrode active material. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

The amount of the binder to be used may be, for example, from 0.1 to 10 parts by mass relative to 100 parts by mass of the positive electrode active material. The binder may include any component. The binder may include at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these, for example.

Positive electrode layer 11 may further include an inorganic filler, an organic filler, a solid electrolyte, a surface modifier, a dispersant, a lubricant, a flame retardant, a protective agent, a flux, a coupling agent, an adsorbent, and/or the like, for example. The positive electrode active material layer may include polyoxyethylene allylphenyl ether phosphate, zeolite, silane coupling agent, $MoS_2$, $WO_3$, and/or the like, for example.

Negative Electrode Layer

Negative electrode layer 12 is adhered to one side of current-collecting foil sheet 13. Negative electrode layer 12 is positioned on the opposite side to the side on which positive electrode layer 11 is positioned. The area of negative electrode layer 12 may be greater than that of positive electrode layer 11. Negative electrode layer 12 includes a negative electrode active material.

The negative electrode active material may be in particle form, or may be in sheet form, for example. The D50 of the negative electrode active material may be 1 $\mu$m or more, or 5 $\mu$m or more, or 10 $\mu$m or more, for example. The D50 of the negative electrode active material may be 30 $\mu$m or less, or 20 $\mu$m or less, or 15 $\mu$m or less, or 10 $\mu$m or less, for example.

The negative electrode active material may include any component. The negative electrode active material may include at least one selected from the group consisting of carbon-based active material, alloy-based active material, Si-C composite material, Li metal, Li-based alloy, and lithium titanate, for example. In some present embodiments, the battery may be a Li-metal negative electrode battery.

The carbon-based active material may include at least one selected from the group consisting of graphite, soft carbon, and hard carbon, for example. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The surface of the graphite may be covered with amorphous carbon, for example. The surface of the graphite may be covered with another type of material, for example. This another type of material may include at least one selected from the group consisting of P, W, Al, and O, for example. The another type of material may include at least one selected from the group consisting of $Al(OH)_3$, $AlOOH$, $Al_2O_3$, $WO_3$, $Li_2CO_3$, $LiHCO_3$, and $Li_3PO_4$, for example.

The alloy-based active material may include at least one selected from the group consisting of Si, Li silicate, SiO, Si-based alloy, tin (Sn), SnO, and Sn-based alloy, for example.

SiO may be represented by the following general formula, for example.

$$SiO_x$$

In the formula, the relationship of $0<x<2$ is satisfied. For example, the relationship of $0.5 \leq x \leq 1.5$ or $0.8 \leq x \leq 1.2$ may be satisfied.

"Si-C composite material" refers to a composite material composed of a carbon-based active material (such as graphite) and an alloy-based active material (such as Si). For example, Si microparticles may be dispersed inside carbon particles. For example, Si microparticles may be dispersed inside graphite particles. For example, Li silicate particles may be covered with a carbon material (such as amorphous carbon).

Separator

Separator 20 is capable of separating positive electrode layer 11 from negative electrode layer 12. Separator 20 is electrically insulating. Separator 20 may include at least one selected from the group consisting of a resin film (a polymer film), an inorganic particle layer, and an organic particle layer, for example. Separator 20 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these, for example. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode layer 11, or may be formed on the side facing the negative electrode layer 12. The inorganic particle layer may be formed on the surface of positive electrode layer 11, or may be formed on the surface of negative electrode layer 12.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

Separator 20 may include an organic particle layer, for example. Separator 20 may include an organic particle layer instead of the resin film, for example. Separator 20 may include an organic particle layer instead of the inorganic particle layer, for example. Separator 20 may include both the resin film and an organic particle layer. Separator 20 may include both the inorganic particle layer and an organic particle layer. Separator 20 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 20 may include a mixed layer, for example. The mixed layer includes both inorganic particles and organic particles.

Electrolyte Solution

The electrolyte solution is a liquid electrolyte. The electrolyte solution includes a solute and a solvent. The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these, for example.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate) =3/7 to 1/9", for example.

The solvent may include EC, FEC, EMC, DMC, and DEC, for example. The volume ratio of these components may satisfy the relationship represented by the following equation, for example.

$$V_{EC}+V_{FEC}+V_{EMC}+V_{DMC}+V_{DEC}=10$$

$_{EC}+V_{FEC}+V_{EMC}+V_{DMC}+V_{DEC}=10$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The relationships of $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$ are satisfied.

For example, the relationship of $1 \leq V_{EC} \leq 2$ or $2 \leq V_{EC} \leq 3$ may be satisfied.

For example, the relationship of $1 \leq V_{FEC} \leq 2$ or $2 \leq V_{FEC} \leq 4$ may be satisfied.

For example, the relationship of $3 \leq V_{EMC} \leq 4$ or $6 \leq V_{EMC} \leq 8$ may be satisfied.

For example, the relationship of $3 \leq V_{DMC} \leq 4$ or $6 \leq V_{DMC} \leq 8$ may be satisfied.

For example, the relationship of $3 \leq V_{DEC} \leq 4$ or $6 \leq V_{DEC} \leq 8$ may be satisfied.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

The electrolyte solution may include an ether-based solvent. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as a trace component (an additive). The additive may include at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these, for example.

The electrolyte solution may include an ionic liquid. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

In some present embodiments, the battery may include a gelled electrolyte. In other words, the battery may be a polymer battery. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

- All-Solid-State Battery -

In some present embodiments, the battery may be an all-solid-state battery. The all-solid-state battery may have a bipolar structure. The all-solid-state battery includes a solid electrolyte instead of the electrolyte solution and separator 20. A solid electrolyte may also be included in positive electrode layer 11 and negative electrode layer 12. Instead of separator 20, a solid electrolyte layer separates positive electrode layer 11 from negative electrode layer 12. The solid electrolyte layer includes a solid electrolyte and a binder, for example.

The solid electrolyte may be a powdery and granular material, for example. The D50 of the solid electrolyte may be 0.1 μm or more, or 0.2 μm or more, or 0.3 μm or more, or 0.4 μm or more, or 0.5 μm or more, or 0.6 μm or more, or 0.7 μm or more, or 0.8 μm or more, or 0.9 μm or more, or 1 μm or more, for example. The D50 of the solid electrolyte may be 5 μm or less, or 4 μm or less, or 3 μm or less, or 2 μm or less, or 1 μm or less.

The solid electrolyte may include at least one selected from the group consisting of a sulfide solid electrolyte, a halide solid electrolyte, an oxide solid electrolyte, a hydride solid electrolyte, and a nitride solid electrolyte, for example.

The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte includes Li and sulfur (S). In addition to Li and S, the sulfide solid electrolyte may further include any component.

The sulfide solid electrolyte may include at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-GeS_2-P_2S_5$, $Li_2S-P_2S_5$,

$Li_{10}GeP_2S_{12}$, $Li_4P_2S_6$, $Li_7P_3S_{11}$, $Li_3PS_4$, and $Li_7PS_6$, for example.

For example, "LiI-LiBr-$Li_3PS_4$" refers to a sulfide solid electrolyte produced by mixing LiI, LiBr, and $Li_3PS_4$ in a freely-selected ratio in terms of amount of substance. For example, the sulfide solid electrolyte may be produced by a mechanochemical method. The mixing ratio may be expressed with the number placed in front of each raw material. For example, "10LiI-15LiBr-75$Li_3PS_4$" means that the mixing ratio is "LiI/LiBr/$Li_3PS_4$=10/15/75 (in amount of substance)".

The sulfide solid electrolyte may have a composition represented by the following general formula, for example.

$$xLi_2S\text{-}(1\text{-}x)P_2S_5$$

In the formula, x may be more than 0, or 0.1 or more, or 0.2 or more, or 0.25 or more, or 0.3 or more, or 0.4 or more, or 0.5 or more, or 0.6 or more, or 0.7 or more, or 0.75 or more, or 0.8 or more, or 0.9 or more, for example. x may be 1 or less, or 0.9 or less, or 0.8 or less, or 0.7 or less, or 0.75 or less, or 0.6 or less, or 0.5 or less, or 0.4 or less, or 0.3 or less, or 0.2 or less, or 0.1 or less, for example. For example, when x is 0.75, "$xLi_2S\text{-}(1\text{-}x)P_2S_5$" may have a composition of $Li_3PS_4$.

The sulfide solid electrolyte may have a composition represented by the following general formula, for example.

$$yLiI\text{-}zLiBr\text{-}(100\text{-}y\text{-}z)[xLi_2S\text{-}(1\text{-}x)P_2S_5]$$

In the formula, x may be 0.5 or more, or 0.6 or more, or 0.7 or more, or 0.75 or more, or 0.8 or more, or 0.9 or more, for example. x may be 1 or less, or 0.9 or less, or 0.8 or less, or 0.75 or less, or 0.7 or less, or 0.6 or less, for example. y may be 0 or more, or 5 or more, or 10 or more, or 15 or more, or 20 or more, or 25 or more, for example. y may be 30 or less, or 25 or less, or 20 or less, or 15 or less, or 10 or less, or 5 or less, for example. z may be 0 or more, or 5 or more, or 10 or more, or 15 or more, or 20 or more, or 25 or more, for example. z may be 30 or less, or 25 or less, or 20 or less, or 15 or less, or 10 or less, or 5 or less, for example.

The sulfide solid electrolyte may have a composition represented by the following general formula, for example.

$$Li_{7\text{-}x\text{-}2y}PS_{6\text{-}x\text{-}y}X_y$$

In the formula, relationships of "0<(7-x-2y)", "0<(6-x-y)", "0≤x", and "0≤y" are satisfied. X may include at least one selected from the group consisting of fluorine (F), chlorine (Cl), bromine (Br), and iodine (1), for example.

The sulfide solid electrolyte may have a composition represented by the following general formula, for example.

$$Li_{4\text{-}x}M_{1\text{-}x}P_xS_4$$

In the formula, x may be more than 0, or 0.1 or more, or 0.2 or more, or 0.3 or more, or 0.4 or more, or 0.5 or more, or 0.6 or more, or 0.7 or more, or 0.8 or more, or 0.9 or more, for example. x may be less than 1, or 0.9 or less, or 0.8 or less, or 0.7 or less, or 0.6 or less, or 0.5 or less, or 0.4 or less, or 0.3 or less, or 0.2 or less, or 0.1 or less, for example. M may include at least one selected from the group consisting of Al, Zn, In, Ge, Si, Sn, Sb, Ga, and Bi, for example.

The sulfide solid electrolyte may have a composition represented by the following general formula, for example.

$$Li_{10+x}Ge_{1+x}P_{2\text{-}x}S_{12}$$

In the formula, x may be 0 or more, or 0.1 or more, or 0.2 or more, or 0.3 or more, or 0.4 or more, or 0.5 or more, or 0.6 or more, for example. x may be 0.7 or less, or 0.6 or less, or 0.5 or less, or 0.4 or less, or 0.3 or less, or 0.2 or less, or 0.1 or less, for example. A sulfide solid electrolyte represented by the above general formula may include an LGPS-type crystalline phase, for example.

The halide solid electrolyte may have a composition represented by the following general formula, for example.

$$Li_{6\text{-}na}M_aX_6$$

In the formula, n represents an oxidation number of M. For example, M may include an atom whose oxidation number is +3. For example, M may include an atom whose oxidation number is +4. M may include at least one selected from the group consisting of Y, Al, Ti, Zr, Ca, and Mg, for example. The relationship of "0<a<2" may be satisfied, for example. X may include at least one selected from the group consisting of F, Cl, Br, and I, for example.

The halide solid electrolyte may have a composition represented by the following general formula, for example.

$$Li_{3\text{-}a}Ti_aAl_{1\text{-}a}F_6$$

In the formula, a may be 0 or more, or 0.1 or more, or 0.2 or more, or 0.3 or more, or 0.4 or more, or 0.5 or more, or 0.6 or more, or 0.7 or more, or 0.8 or more, or 0.9 or more, for example. a may be 1 or less, or 0.9 or less, or 0.8 or less, or 0.7 or less, or 0.6 or less, or 0.5 or less, or 0.4 or less, or 0.3 or less, or 0.2 or less, or 0.1 or less, for example.

The halide solid electrolyte may have a composition represented by the following general formula, for example.

$$Li_3YCl_aBr_bI_{6-a-b}$$

In the formula, the relationship of "$0 \leq (a+b) \leq 6$" may be satisfied, for example. a may be 0 or more, or 1 or more, or 2 or more, or 3 or more, or 4 or more, or 5 or more, for example. a may be 6 or less, or 5 or less, or 4 or less, or 3 or less, or 2 or less, or 1 or less, for example. b may be 0 or more, or 1 or more, or 2 or more, or 3 or more, or 4 or more, or 5 or more, for example. b may be 6 or less, or 5 or less, or 4 or less, or 3 or less, or 2 or less, or 1 or less, for example.

The oxide solid electrolyte may include at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$, for example. The hydride solid electrolyte may include $LiBH_4$ and/or the like, for example. The nitride solid electrolyte may include $Li_3N$, $Li_3BN_2$, and/or the like, for example.

[Examples]

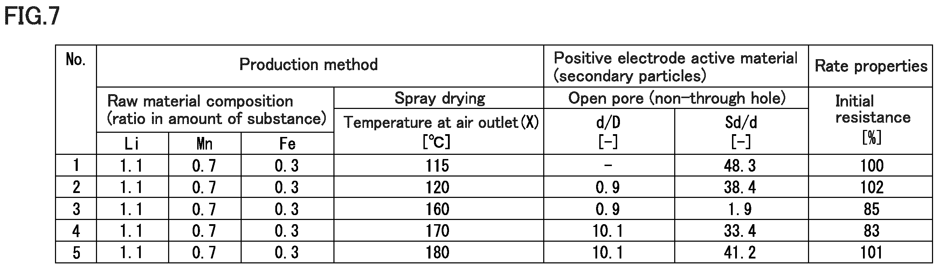

Fig. 7 is a table showing experiment results. By the procedure described below, positive electrode active materials of No. 1 to No. 5 were produced.

(a) Forming Slurry

Lithium hydroxide monohydrate, manganese carbonate, ferric phosphate, and lithium dihydrogen phosphate were prepared in amounts that satisfied the composition ratio specified in the composition formula "$Li_{1.1}Mn_{0.7}Fe_{0.3}PO_4$". Glucose was prepared in an amount of 8% in mass fraction relative to the raw material mixture. The materials thus prepared and water were mixed together to form a slurry. The solid concentration of the slurry was 30% in mass fraction. Wet grinding was carried out to achieve a D50 of 0.30 $\mu$m.

(b) Granulation

The slurry was spray dried to form secondary particles. The target value of the D50 of the secondary particles was $9 \pm 1$ $\mu$m. Regarding the spray dryer, the temperature at the air inlet was 250°C. The temperature at the air outlet was X $\pm 15$°C. The air intake pressure was 2.0 MPa. The nozzle pressure of the spray nozzle was $0.2 \pm 0.1$ MPa. The temperature "X" at the air outlet for each sample is shown in Fig. 7.

(c) Calcination

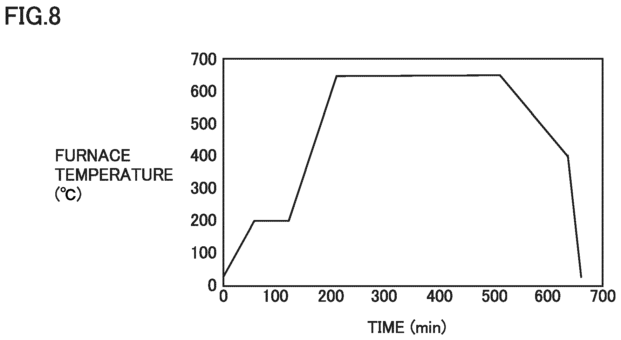

The secondary particles were calcined in an electric furnace in an inert atmosphere, and thereby LMFP was synthesized. Fig. 8 is a temperature profile during calcination. Firstly, the furnace temperature is raised at a temperature raising rate of 3°C/minute to reach 200°C. The furnace temperature is maintained at 200°C for 1 hour. Then, the furnace temperature is raised at a temperature raising rate of 5°C/minute to reach 650°C. The furnace temperature is maintained at 650°C for 5 hours. Subsequently, the furnace temperature is lowered at a temperature lowering rate of 2°C/minute to reach 400°C. Furthermore, the furnace temperature is lowered at a temperature lowering rate of 15°C/minute to reach room temperature.

- Evaluation -

A cylindrical lithium-ion secondary battery (a cylindrical cell) was produced. The cell configuration is as described below.

Power generation element: Wound
Positive electrode: LMFP/AB/PAN=88/10/2 (in mass)
Negative electrode: Negative electrode active material (natural graphite), CMC, SBR
Electrolyte: $LiPF_6$ (1 mol/L), EC/DMC/EMC=3/4/3 (in volume)

Each of the positive electrode and the negative electrode was produced by applying a slurry to the surface of a base material (a metal foil sheet). As an application apparatus, a film applicator (equipped with film-thickness adjuster function) manufactured by Allgood was used. After slurry application, the coating film was dried at 80°C for 5 minutes.

The initial resistance (IV resistance) of the cylindrical cell was measured. It is conceivable that the lower the initial resistance is, the better the rate properties are.

- Results -

Referring to Fig. 7, when the relationships of "0.9≤d/D≤10.1" and "1.9≤Sd/d≤33.4" are satisfied, rate properties tend to be improved.

**Claims**

1. A positive electrode active material comprising:

   secondary particles (2), wherein
   each of the secondary particles (2) includes primary particles (1),
   each of the primary particles (1) includes an olivine-type phosphate compound,
   an open pore (3) is formed in the secondary particle (2),
   the open pore (3) is a non-through hole, and
   a cross section of the secondary particle (2) satisfies relationships below:

$$0.9 \leq d/D \leq 10.1;$$

   and

$$1.9 \leq Sd/d \leq 33.4$$

   where
   d represents a maximum depth of the open pore (3),
   D represents an opening diameter of the open pore (3), and
   Sd represents a diameter of a smallest circumcircle of the cross section of the secondary particle (2).

2. The positive electrode active material according to claim 1, wherein the open pore (3) has a bottom portion inside the secondary particle (2), and the bottom portion has a shape of a concave surface.

3. The positive electrode active material according to claim 2, wherein the cross section of the secondary particle (2) satisfies a relationship below:

$$1 < d/R$$

   where

   d represents the maximum depth of the open pore (3), and
   R represents a radius of curvature of the bottom portion of the open pore (3).

4. The positive electrode active material according to any one of claims 1 to 3, wherein the olivine-type phosphate compound includes at least one selected from the group consisting of lithium manganese phosphate and lithium manganese iron phosphate.

5. An electrode comprising:

   a positive electrode layer (11), wherein
   the positive electrode layer (11) includes the positive electrode active material according to any one of claims 1 to 3.

6. A battery comprising the electrode (10) according to claim 5.

7. The battery according to claim 6, having a bipolar structure.

FIG.1

FIG.2

FIG.3

FIG.4

FIG.5

FIG.6

## FIG.7

| No. | Production method | | | | Positive electrode active material (secondary particles) | | Rate properties |
| | Raw material composition (ratio in amount of substance) | | | Spray drying | Open pore (non-through hole) | | Initial resistance [%] |
| | Li | Mn | Fe | Temperature at air outlet(X) [℃] | d/D [-] | Sd/d [-] | |
| 1 | 1.1 | 0.7 | 0.3 | 115 | – | 48.3 | 100 |
| 2 | 1.1 | 0.7 | 0.3 | 120 | 0.9 | 38.4 | 102 |
| 3 | 1.1 | 0.7 | 0.3 | 160 | 0.9 | 1.9 | 85 |
| 4 | 1.1 | 0.7 | 0.3 | 170 | 10.1 | 33.4 | 83 |
| 5 | 1.1 | 0.7 | 0.3 | 180 | 10.1 | 41.2 | 101 |

EP 4 730 423 A1

FIG.8

FURNACE TEMPERATURE (°C)

TIME (min)

**EUROPEAN SEARCH REPORT**

Application Number

EP 25 20 3329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 335 972 A (SHENZHEN DEFANGCHUANGYU NEW ENERGY TECH CO LTD) 12 July 2024 (2024-07-12) * paragraphs [0054] - [0066] * * claims 1,2,3,9,10 * * figures 1,2 * | 1-7 | INV. H01M4/136 ADD. H01M4/02 |
| A | CN 103 178 267 A (UNIV GUANGXI) 26 June 2013 (2013-06-26) * paragraphs [0007] - [0021], [0028] * * example 1 * * figure 3 * | 1-7 | |
| A | US 2023/072041 A1 (KAWAMURA HIROAKI [JP] ET AL) 9 March 2023 (2023-03-09) * paragraphs [0090] - [0093]; example 1 * | 1-7 | |

TECHNICAL FIELDS SEARCHED (IPC)

H01M
C01G

The present search report has been drawn up for all claims

| Place of search | Date of completion of the search | Examiner |
|---|---|---|
| The Hague | 5 December 2025 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3329

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2025

| Patent document cited in search report | | Publication date | Patent family member(s) | | Publication date |
|---|---|---|---|---|---|
| CN 118335972 | A | 12-07-2024 | NONE | | |
| CN 103178267 | A | 26-06-2013 | NONE | | |
| US 2023072041 | A1 | 09-03-2023 | CN | 115039258 A | 09-09-2022 |
| | | | EP | 4099440 A1 | 07-12-2022 |
| | | | JP | 7707546 B2 | 15-07-2025 |
| | | | JP | WO2021153110 A1 | 05-08-2021 |
| | | | KR | 20220134536 A | 05-10-2022 |
| | | | TW | 202130017 A | 01-08-2021 |
| | | | US | 2023072041 A1 | 09-03-2023 |
| | | | WO | 2021153110 A1 | 05-08-2021 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024181996 A
- WO 2020065833 A